# EUROPÄISCHE PATENTSCHRIFT

(11) **EP 4 454 980 B1**
(45) Veröffentlichungstag und Bekanntmachung des Hinweises auf die Patenterteilung: **21.01.2026**
(21) Anmeldenummer: 24157363.3
(22) Anmeldetag: 13.02.2024
(51) Int. Cl.: B62D 55/10, B62D 55/112, B62D 55/30

(54) **RAUPENLAUFWERK FÜR EINE LANDWIRTSCHAFTLICHE ARBEITSMASCHINE SOWIE LANDWIRTSCHAFTLICHE ARBEITSMASCHINE**
CRAWLER DRIVE FOR AN AGRICULTURAL MACHINE AND AGRICULTURAL MACHINE
MÉCANISME DE ROULEMENT À CHENILLES POUR UN ENGIN AGRICOLE ET ENGIN AGRICOLE

(30) Priorität: 25.04.2023 DE 102023110457
(43) Veröffentlichungstag der Anmeldung: 30.10.2024
(73) Patentinhaber: CLAAS Industrietechnik GmbH, 33106 Paderborn (DE)
(72) Erfinder: Wagemann, Sebastian, 59302 Oelde-Sünninghausen (DE)
(74) Vertreter: CLAAS Gruppe

(56) Entgegenhaltungen:
- EP-A1- 3 483 048
- EP-A1- 3 704 928
- DE-A1- 102014 003 964

## Beschreibung

Die vorliegende Anmeldung betrifft ein Raupenlaufwerk für eine landwirtschaftliche Arbeitsmaschine gemäß dem Oberbegriff von Anspruch 1. Ferner betrifft die vorliegende Anmeldung eine landwirtschaftliche Arbeitsmaschine gemäß dem Oberbegriff von Anspruch 11.

Das Raupenlaufwerk umfasst ein vorderes Hauptrad sowie ein hinteres Hauptrad. Diese Haupträder werden in der Technik auch als sogenannte "Idler Wheels" bezeichnet. Typischerweise ist eines der Haupträder, in aller Regel das hintere, drehantreibbar, während das andere Hauptrad passiv zur Führung eines die Haupträder umspannenden Laufgurts dient. Letzterer ist ebenfalls Teil des Raupenlaufwerks. Die Haupträder sind in Längsrichtung des Raupenlaufwerks betrachtet einander gegenüberliegend bzw. hintereinander angeordnet. Hierbei sind das vordere Hauptrad einem vorderen Hauptrahmen und das hintere Hauptrad einem hinteren Hauptrahmen zugeordnet. Diese Zuordnung kann insbesondere darin bestehen, dass die Haupträder mittelbar oder unmittelbar an ihrem jeweiligen Hauptrahmen angeordnet sind und jeweils um eine Drehachse drehbeweglich gelagert sind.

Insbesondere kann das vordere Hauptrad unter Ausbildung seiner Drehachse an einem Schwenkarm gelagert sein, der an dem vorderen Hauptrahmen angeordnet ist. Der Schwenkarm ist hierbei und Ausbildung eines Drehgelenks an den Hauptrahmen angeschlossen, sodass der Schwenkarm relativ zu dem Hauptrahmen verschwenkbar ist. Da die Drehachse des Hauptrads in einem Abstand von dem Drehgelenk des Schwenkarms an letzterem angeordnet ist, geht eine Verschwenkung des Schwenkarms relativ zu dem vorderen Hauptrahmen mit einer Bewegung der Schwenkachse des vorderen Hauptrads auf einer Kreisbahn um das Drehgelenk einher. Diese Bewegung führt zu einer Veränderung eines Abstands zwischen der Drehachse des vorderen Hauptrades und der Drehachse des hinteren Hauptrads, wodurch eine Gurtspannung des Laufgurts verändert wird. In einer solchen Konstellation kann der Schwenkarm bevorzugt ferner mit einer Kolben-Zylinder-Einheit zusammenwirken, mittels der eine Schwenkbewegung des Schwenkarms erzeugt werden kann und somit die Gurtspannung des Laufgurts einstellbar ist. Eine solche Kolben-Zylinder-Einheit wird in der Technik als "Bandspannzylinder" bezeichnet. Eine solche mittelbare Anordnung der Drehachse des vorderen Hauptrades an dem vorderen Hauptrahmen wird im Sinne der vorliegenden Anmeldung als eine Anordnung des vorderen Hauptrads an dem vorderen Hauptrahmen verstanden.

In einem zwischen den beiden Haupträdern befindlichen Zwischenbereich sind mindestens zwei Stützräder angeordnet. Diese werden in der Technik auch als sogenannte "Midroller" bezeichnet. Die Stützräder weisen typischerweise gegenüber den Haupträdern einen kleineren Durchmesser auf. Sie stehen ebenso wie die Haupträder unmittelbar mit dem Laufgurt im Kontakt, wobei die Stützräder mit einem unteren Abschnitt des Laufgurts in Kontakt stehen, der im Betrieb des Raupenlaufwerks typischerweise unmittelbar mit einem Untergrund in Kontakt tritt. Auf diese Weise können auf das Raupenlaufwerk einwirkende Kräfte sowohl über die beiden Haupträder als auch über die beiden Stützräder über den Laufgurt in den Untergrund abgeleitet werden.

Das Raupenlaufwerk umfasst ferner eine Anlenkstelle, mittels der es unter Ausbildung einer Maschinenachse schwenkbeweglich mit einer Karosserie einer jeweiligen Arbeitsmaschine verbindbar ist. Bei einer typischen landwirtschaftlichen Arbeitsmaschine wie beispielsweise einem Mähdrescher oder einem Feldhäcksler ist an einander gegenüberliegenden Enden einer Vorderachse der jeweiligen Arbeitsmaschine jeweils ein Raupenlaufwerk angeordnet. Das jeweilige Raupenlaufwerk ist dabei an der genannten Anlenkstelle an die Vorderachse der Arbeitsmaschine angelenkt, sodass die Arbeitsmaschine mittels der Raupenlaufwerke auf einem jeweiligen Untergrund aufsteht und über die Raupenlaufwerke ein Vortrieb der Arbeitsmaschine bewirkt werden kann.

Die beiden Hauptrahmen, denen die Haupträder zugeordnet sind, sind schwenkbeweglich miteinander gekoppelt. Hierdurch wird bewirkt, dass die Hauptrahmen gegeneinander um eine gemeinsame Schwenkachse verschwenkbar sind. Bevorzugt ist diese Schwenkachse identisch zu der Maschinenachse an der Anlenkstelle des Raupenlaufwerks. Die Schwenkachse und die Maschinenachse sind jeweils horizontal sowie senkrecht zu einer von dem Laufgurt aufgespannten Laufgurtebene orientiert.

Die Stützräder sind an einem gemeinsamen Stützrahmen angeordnet, wobei sie bezogen auf eine Längsachse des Raupenlaufwerks hintereinander angeordnet sind. Mithin sind die Haupträder und die Stützräder in Längsrichtung des Raupenlaufwerks betrachtet "in Reihe" angeordnet, wobei das vordere Hauptrad ein vorderes Ende des Raupenlaufwerks bildet, sodann die beiden Stützräder folgen und schließlich das hintere Hauptrad das hintere Ende des Raupenlaufwerks bildet.

Zur Verbindung des Stützrahmens mit den Hauptrahmen ist eine Stützradschwinge vorgesehen, mittels der der Stützrahmen schwenkbeweglich mit dem vorderen Hauptrahmen verbunden ist. Die Stützradschwinge ist hierbei gelenkig sowohl mit dem vorderen Hauptrahmen als auch mit dem Stützrahmen verbunden. Die Stützradschwinge ist demzufolge in mechanischer Hinsicht als Pendelstab ausgebildet. Die gelenkige Verbindung der beiden Hauptrahmen sowie die gelenkige Verbindung der Stützradschwinge mit dem vorderen Hauptrahmen trägt dazu bei, dass jeweils die Haupträder und die Stützräder bei Überfahren eines Hindernisses getrennt voneinander angehoben werden können, ohne dass der Rest des Raupenlaufwerks vom Untergrund abhebt.

Raupenlaufwerke der vorstehend beschriebenen Art sind im Stand der Technik bereits bekannt. Hierzu wird beispielhaft auf die deutsche Offenlegungsschrift DE 10 2014 003 964 A1 hingewiesen. Die dort beschriebene Erfindung hat zum Gegenstand, dass die vorstehend als Schwenkachse bezeichnete Achse, um die der vordere Hauptrahmen und der hintere Hauptrahmen schwenkbeweglich relativ zueinander gelagert sind, und die Maschinenachse zusammenfallen, die sich an der Anlenkstelle des Raupenlaufwerks an die Achse einer jeweiligen Arbeitsmaschine befindet.

Um eine Kraftabtragung, die über ein Raupenlaufwerk in einen jeweiligen Untergrund stattfindet, möglichst gleichmäßig über die einzelnen Räder des Raupenlaufwerks (sowohl Haupträder als auch Stützräder) zu bewirken, umfasst ein Raupenlaufwerk typischerweise mindestens eine Kolben-Zylinder-Einheit, die an einem ersten Ende mit der Stützradschwinge und mit einem zweiten Ende mit dem vorderen Hauptrahmen verbunden ist. Ferner ist es bekannt, dass das Raupenlaufwerk mindestens eine weitere Kolben-Zylinder-Einheit umfasst, die den vorderen Hauptrahmen und den hinteren Hauptrahmen miteinander verbindet. Die Aufgabenstellung für derartige Kolben-Zylinder-Einheiten besteht im Grunde darin, die Kraftverteilung über die einzelnen Räder zu vergleichmäßigen, und zwar auch dann, wenn Hindernisse überfahren werden, das heißt das Raupenlaufwerk nicht vollständig auf einem zumindest im Wesentlichen ebenen Untergrund aufsteht. Die Aufgabenstellung besteht darin, dass über das Raupenlaufwerk abgeleitete Kräfte möglichst gleichmäßig über die Räder in den Untergrund geleitet werden

Hierbei hat es sich im Stand der Technik als aufwendig herausgestellt, derartige Raupenlaufwerke zu konstruieren, da der zur Verfügung stehende Bauraum zur Anordnung verschiedener Kolben-Zylinder-Einheiten knapp ist. Zudem ist die Abstimmung zwischen den einzelnen Kolben-Zylinder-Einheiten aufwendig, um in verschiedenen Betriebssituationen des jeweiligen Raupenlaufwerks, das heißt insbesondere für unterschiedliche Randbedingungen betreffend den Untergrund, durchgehend zu einem möglichst gleichmäßigen Kraftabtrag über die Räder des Raupenlaufwerks zu kommen.

Der vorliegenden Anmeldung liegt mithin die Aufgabe zugrunde, ein Raupenlaufwerk für eine landwirtschaftliche Arbeitsmaschine bereitzustellen, das gegenüber dem Stand der Technik einfacher konstruiert ist.

Die zugrunde liegende Aufgabe wird erfindungsgemäß mittels eines Raupenlaufwerks mit den Merkmalen des Anspruchs 1 gelöst. Vorteilhafte Ausgestaltungen ergeben sich aus den zugehörigen Unteransprüchen.

Das erfindungsgemäße Raupenlaufwerk ist durch ein Koppelglied gekennzeichnet, das an seinem ersten Ende ("Schwingenende") mit der Stützradschwinge und an seinem zweiten Ende ("Rahmenende") mit dem hinteren Hauptrahmen gekoppelt ist. Hierdurch sind der hintere Hauptrahmen und die Stützradschwinge mittels des Koppelglieds in kraftübertragender Weise miteinander gekoppelt. In besonders bevorzugter Weise ist das Raupenlaufwerk abgesehen von dem genannten Koppelglied sowie der gelenkigen Anlenkung an den vorderen Hauptrahmen frei von weiteren Verbindungen zwischen der Stützradschwinge und dem vorderen oder hinteren Hauptrahmen ausgebildet.

Das erfindungsgemäße Raupenlaufwerk hat viele Vorteile. Insbesondere wird eine Kraftverteilung zwischen den Haupträdern und den Stützrädern allein mittels des einen Koppelglieds zwischen der Stützradschwinge und dem hinteren Hauptrahmen geschaffen. Dies ist beispielhaft anhand folgender Fallunterscheidungen veranschaulicht: zunächst wird der Fall betrachtet, dass das vordere Hauptrad über ein Hindernis fährt und dadurch gegenüber den Stützrädern und dem hinteren Hauptrad angehoben wird. Die Anhebung des vorderen Hauptrades geht mit der Anhebung des vorderen Hauptrahmens einher, an dem die Stützradschwinge gelagert ist. An die Stützradschwinge ist gemäß vorstehender Erläuterung des Koppelglied mit dessen Schwingenende angelenkt. Dementsprechend wird auch das Koppelglied ein Stück weit angehoben. Die Beträge der Anhebungen des vorderen Hauptrads und des Koppelglieds stehen im Verhältnis ihrer jeweiligen Abstände bezogen auf die Schwenkachse, um die der vordere Hauptrahmen im Zuge der Anhebung des vorderen Hauptrades verschwenkt wird. Da das Koppelglied an seinem dem Schwingenende gegenüberliegenden Rahmenende mit dem hinteren Hauptrahmen gekoppelt ist, wird entsprechend der Anhebung des Koppelglieds auch der hintere Hauptrahmen ein Stück weit angehoben. Da sowohl die Stützradschwinge gelenkig an dem Stützrahmen als auch der hintere Hauptrahmen gelenkig an dem hinteren Hauptrad angeordnet sind, bleiben das hintere Hauptrad und die Stützräder auf ihrem bisherigen Höhenniveau und werden mithin nicht von dem Untergrund abgehoben. Das Koppelglied stellt dabei sicher, dass die Stützräder weiterhin zur Abtragung von Kräften herangezogen werden und mithin zum Kraftabtrag der jeweiligen Arbeitsmaschine bis in den Untergrund beitragen.

In dem zweiten hier betrachteten Fall überfahren die Stützräder ein Hindernis und werden dementsprechend angehoben. Dies geht ebenfalls mit einer Anhebung der Stützradschwinge einher, an die das Koppelglied angelenkt ist. Da die Stützradschwinge im Übrigen mit dem vorderen Hauptrahmen lediglich unter Ausbildung eines Gelenks verbunden ist, wird der vordere Hauptrahmen lediglich indirekt bewegt, nämlich infolge einer Anhebung des hinteren Hauptrahmens über das Koppelglied und einer damit einhergehenden Anhebung der Verbindungsstelle, an der der vordere Hauptrahmen unter Ausbildung der Gelenkachse mit dem hinteren Hauptrahmen verbunden ist. Da das vordere Hauptrad unter Ausbildung seiner Drehachse dem vorderen Hauptrahmen zugeordnet ist, geht die Verschwenkung des vorderen Hauptrahmens nicht mit einer Anhebung des vorderen Hauptrads einher. Letzteres steht demzufolge weiterhin über den Laufgurt in Kontakt mit dem Untergrund und kann hierdurch auf das Raupenlaufwerk einwirkende Kräfte in den Untergrund ableiten. Für das hintere Hauptrad gilt dies analog.

Das vorstehend beschriebene Prinzip gilt bei einer Anhebung des hinteren Hauptrades infolge des Überfahrens eines Hindernisses analog, wobei die Einleitung von Kräften in die Stützräder über das Koppelglied erfolgt.

Mithin hat das erfindungsgemäße Raupenlaufwerk den besonderen Vorteil, dass es in der einfachsten Ausgestaltung mit lediglich einem einzigen Koppelglied sicherstellt, dass fortwährend ein zuverlässiger Abtrag von Kräften über die beiden Haupträder und die beiden Stützräder in den Untergrund erfolgt. Hierdurch kann das Raupenlaufwerk besonders einfach konstruiert werden, wobei insbesondere auf ein zweites Koppelglied, das im Stand der Technik typischerweise als Kolben-Zylinder-Einheit ausgebildet ist, verzichtet werden kann.

In einer vorteilhaften Ausgestaltung des Raupenlaufwerks ist das Koppelglied derart ausgerichtet, dass eine in sich gerade Gliedachse des Koppelglieds, die das Schwingenende und das Rahmenende des Koppelglieds miteinander verbindet, höchstens um 15°, vorzugsweise höchstens um 10°, weiter vorzugsweise höchstens um 5°, gegen eine Vertikale geneigt orientiert ist. Diese Ausgestaltung hat den Vorteil, dass die Kraftverteilung zwischen den Haupträdern und den Stützrädern besonders einfach bewerkstelligt werden kann. Insbesondere sind keine übrigen ausgleichenden Elemente oder dergleichen erforderlich, die eine betragsmäßig gewünschte Krafteinleitung in die Stützradschwinge und die Stützräder sicherstellen, falls das Koppelglied "schräg" orientiert wäre.

Ferner kann es besonders von Vorteil sein, wenn die Schwenkachse der beiden Hauptrahmen und die Maschinenachse zusammenfallen. Bei dieser Ausgestaltung weist das Raupenlaufwerk ein zentrales Hauptgelenk auf, das die Anlenkstelle bildet und an dem es unter Ausbildung der Maschinenachse an eine jeweilige Achse einer Arbeitsmaschine angeschlossen ist. An diesem zentralen Hauptgelenk ist ferner die Schwenkachse ausgebildet, an der der vordere Hauptrahmen und der hintere Hauptrahmen miteinander schwenkbeweglich verbunden sind. Bevorzugt befindet sich die Anlenkstelle - und mithin die Maschinenachse und die Schwenkachse - in Längsrichtung des Raupenlaufwerks betrachtet mittig an dem Raupenlaufwerk, sodass ein horizontal gemessener Abstand der Drehachse des vorderen Hauptrads von der Schwenkachse zumindest im Wesentlichen genauso groß ist wie ein horizontal gemessener Abstand der Drehachse des hinteren Hauptrades von der Schwenkachse. Diese Ausgestaltung trägt ebenfalls zu einer Vereinfachung des Raupenlaufwerks bei, da die Kinematik der möglichen Relativbewegungen der einzelnen Elemente zueinander gegenüber einer Ausgestaltung, bei der die Schwenkachse und Maschinenachse getrennt voneinander angeordnet sind, vereinfacht ist.

In einer weiterhin vorteilhaften Ausgestaltung sind das Schwingenende und das Rahmenende des Koppelglieds in Längsrichtung des Raupenlaufwerks betrachtet auf derselben Seite einer vertikal orientierten Mittelebene angeordnet, die die Schwenkachse beinhaltet. Diese Mittelebene, die senkrecht zu einer von dem Laufgurt aufgespannten Laufgurtebene orientiert ist, trennt das Raupenlaufwerk gedanklich in einen vorderen Abschnitt und einen hinteren Abschnitt, wobei der vordere Abschnitt den vorderen Hauptrahmen und das vordere Hauptrad sowie der hintere Abschnitt den hinteren Hauptrahmen und das hintere Hauptrad umfassen. Gemäß vorstehender Beschreibung befindet sich die Schwenkachse bevorzugt in Übereinstimmung ihrer Lage mit der Maschinenachse und weiterhin bevorzugt in einer in Längsrichtung betrachteten Mitte des Raupenlaufwerks.

Die Anordnung des Koppelglieds auf einer Seite der Mittelebene, vorzugsweise auf der Seite des vorderen Abschnitts, trägt ebenfalls zu einer besonders einfachen Kinematik des Raupenlaufwerks bei. Hierbei kann über den Abstand des Koppelglieds von der Schwenkachse das Kräfteverhältnis eingestellt werden, in dem die Stützradschwinge und mithin die Stützräder mit Kräften beaufschlagt bzw. zur Ableitung von Kräften in den Untergrund herangezogen werden. Dabei gilt, dass die Stützräder eine umso größere Kraftabtragung bewirken, desto näher sich das Schwingenende des Koppelglieds entlang der Stützradschwinge betrachtet an dem Stützrahmen befindet. Beispielsweise kann das Schwingenende genau in der Mitte der Stützradschwinge angeordnet sein, sodass Kräfte, die mittels des Koppelglieds in die Stützradschwinge eingeleitet werden, sich hälftig auf die Anlenkung der Stützradschwinge an den vorderen Hauptrahmen und den Stützrahmen aufteilen. Eine Verlagerung des Schwingenendes entlang der Stützradschwinge führt entsprechend zu einer von der hälftigen Aufteilung abweichenden Aufteilung der Kräfte auf den vorderen Hauptrahmen und den Stützrahmen. Bevorzugt befindet sich das Schwingenende des Koppelglieds in eine Richtung parallel zu der Längsachse des Raupenlaufwerks betrachtet in einem Abstand von der Schwenkachse von höchstens 1/4, vorzugsweise höchstens einem 1/6, weiter vorzugsweise höchstens 1/8, eines entsprechend gemessenen Radabstands zwischen den Drehachsen der Haupträder.

Weiterhin kann eine solche Ausgestaltung des Raupenlaufwerks vorteilhaft sein, bei der die Drehachsen der beiden Haupträder und die Schwenkachse zumindest bei Vorliegen des Raupenlaufwerks in einer Mittellage zumindest im Wesentlichen auf einem gemeinsamen Höhenniveau liegen. Die Schwenkachse befindet sich bei Vorliegen des Raupenlaufwerks in dessen Mittellage in ihrer Nulllage. Die Mittellage des Raupenlaufwerks beschreibt dabei im Sinne der vorliegenden Anmeldung einen Zustand des Raupenlaufwerks, in dem selbiges auf einem ebenen Untergrund aufsteht, das heißt weder die Haupträder noch die Stützräder ein Hindernis überfahren. Eine solche Mittellage eines Raupenlaufwerks ist in den Figuren des Ausführungsbeispiels jeweils veranschaulicht. Die Anordnung der Schwenkachse auf demselben Höhenniveau wie die Drehachsen der Haupträder führt dazu, dass infolge einer Gurtspannung des Laufgurts kein Drehmoment um die Schwenkachse bewirkt wird. Aufgrund des zumindest im Wesentlichen identischen vertikal gemessenen Abstands eines oberen Abschnitts des Laufgurts von der Schwenkachse im Vergleich zu dem vertikal gemessenen Abstand eines unteren Abschnitts des Laufgurts von der Schwenkachse heben sich die in dem Laufgurt herrschenden Kräfte durch ihren identischen Hebelarm bezogen auf die Schwenkachse gegeneinander auf, sodass kein Drehmoment auftritt. Ein solches tritt erst dann auf, wenn die Schwenkachse aus ihrer Nulllage heraus vertikal verlagert wird, was infolge einer Anhebung eines der Räder des Raupenlaufwerks geschehen kann.

Sofern es zu einer Auslenkung der Schwenkachse ausgehend von ihrer Nulllage in vertikale Richtung kommt, wie dies beispielsweise infolge der Anhebung mindestens eines der Räder des Laufwerks bei dem Überfahren eines Hindernisses geschieht, ist typischerweise mit der Eintragung eines durch den Laufgurt und dessen Gurtspannung bewirkten Drehmoments um die Schwenkachse zu rechnen, da in aller Regel die Abstände des oberen Abschnitts des Laufgurts und des unteren Abschnitts des Laufgurts jeweils von der Schwenkachse infolge der vertikalen Verlagerung der Schwenkachse unterschiedlich sein werden. Entsprechend sind die Hebelarme zwischen dem unteren Abschnitt des Laufgurts und der Schwenkachse sowie dem oberen Abschnitt des Laufgurts und der Schwenkachse verschieden, sodass sich die infolge der Gurtspannung um die Schwenkachse erzeugten Drehmomente nicht gegenseitig aufheben. Dabei gilt, dass eine umso größere Auslenkung der Schwenkachse in vertikale Richtung zu einem umso größeren, effektiv an der Schwenkachse wirkenden Drehmoment führt, das eine Verschwenkung des vorderen Hauptrahmens relativ zu dem hinteren Hauptrahmen um die Schwenkachse bewirkt. Das System verstärkt sich dabei selbst.

Aufgrund dieser Umstände kann es besonders vorteilhaft sein, wenn das Raupenlaufwerk mindestens ein Federelement umfasst. Dieses ist bevorzugt passiv ausgebildet, wobei eine von dem Federelement bewirkte Federkraft allein infolge einer Auslenkung der Feder bedingt ist. Ein erstes Ende des Federelements ist an den vorderen Hauptrahmen und ein zweites Ende des Federelements an der hinteren Hauptrahmen angeschlossen. Auf diese Weise verbindet das Federelement die beiden Hauptrahmen miteinander, sodass bei einer Verschwenkung der beiden Hauptrahmen relativ zueinander um die Schwenkachse das Federelement gestreckt oder gestaucht wird. Entsprechend ergibt sich eine Änderung einer von dem Federelement ausgeübten Federkraft, die an den Enden des Federelements jeweils hälftig in den vorderen Hauptrahmen und den hinteren Hauptrahmen eingetragen wird. Das Federelement ist derart angeordnet, dass sich eine Wirkachse des Federelements, entlang der die Federkraft wirkt, in einem Abstand zu der Schwenkachse befindet. Auf diese Weise wird infolge der Federkraft ein Drehmoment um die Schwenkachse auf die beiden Hauptrahmen ausgeübt. Da die Federkraft an den Enden des Federelements prinzipbedingt in entgegengesetzte Richtung auf den vorderen Hauptrahmen und den hinteren Hauptrahmen einwirkt, werden der vordere Hauptrahmen und der hintere Hauptrahmen mit einander entgegengesetzten Drehmomenten um die gemeinsame Schwenkachse beaufschlagt.

Hierbei ist das Federelement bevorzugt derart konfiguriert, dass es sich bei Vorliegen des Raupenlaufwerks in der Mittellage (und mithin bei Vorliegen der Schwenkachse in ihrer Nulllage) entweder in einem Passivzustand, in dem das Federelement weder Zugkräfte noch Druckkräfte entwickelt, oder in einem je nach Anordnung mit Zugspannung oder Druckspannung vorgespannten Zustand befindet. Da sich die Schwenkachse ausgehend von ihrer Nulllage typischerweise nicht nach unten verlagern kann, ist in aller Regel lediglich der Fall zu betrachten, dass die Schwenkachse ausgehend von ihrer Nulllage vertikal nach oben verlagert wird. Entsprechend ist hinsichtlich der Wirkung der Gurtspannung lediglich ein solcher Zustand zu betrachten, bei dem sich das Raupenlaufwerk nach oben "aufstellt", das heißt die Schwenkachse infolge ihrer Bewegung vertikal nach oben durch Wirkung eines durch den Laufgurt bedingten Drehmoments weiter nach oben ausgelenkt wird. Das Federelement dient nunmehr dazu, ebendieser Bewegung entgegenzuwirken und die sogenannte "Aufstellung" des Raupenlaufwerks zumindest zu vermindern oder zu begrenzen. Sofern das Federelement derart angeordnet wird, dass sich die beiden Enden des Federelements im Zuge einer beschriebenen Aufstellbewegung des Raupenlaufwerks voneinander entfernen, ist das Federelement bevorzugt als Zugfeder ausgebildet, die mit einer Zugspannung vorgespannt ist. Umgekehrt kann das Federelement auch derart angeordnet sein, dass sich dessen beiden Enden an Stellen des vorderen Hauptrahmens und des hinteren Hauptrahmens befinden, die sich infolge des Aufstellens des Raupenlaufwerks aufeinander zu bewegen. In diesem Fall ist das Federelement bevorzugt als Druckfeder ausgebildet, die mit einer Druckspannung vorgespannt ist. In jedem Fall soll das Federelement derart wirken, dass es der infolge des Aufstellens des Raupenlaufwerks bedingten Verschwenkung des vorderen Hauptrahmens relativ zu dem hinteren Hauptrahmen entgegenwirkt.

Alternativ oder zusätzlich zu einem beschriebenen Federelement ist es ebenfalls denkbar, dass das Raupenlaufwerk über eine aktive Kolben-Zylinder-Einheit verfügt, deren erstes Ende an den vorderen Hauptrahmen und deren zweites Ende an den hinteren Hauptrahmen angeschlossen sind. Die Kolben-Zylinder-Einheit ist dazu vorgesehen und eingerichtet, die Hauptrahmen aktiv mit einem einander entgegengesetzten Drehmoment um die gemeinsame Schwenkachse zu beaufschlagen. Im Unterschied zu dem passiven Federelement ist demzufolge hier das aktive Aufbringen von Kräften möglich. Beispielsweise kann es sich bei einer solchen Kolben-Zylinder-Einheit um einen Hydraulikzylinder handeln. Die Ausgestaltung des Raupenlaufwerks mit einer solchen Kolben-Zylinder-Einheit hat den Vorteil, dass bewusst die beiden Hauptrahmen relativ zueinander um die Schwenkachse verschwenkt werden können, und mithin nicht lediglich eine Gegenwirkung zu einer möglichen Aufstellung des Raupenlaufwerks bewirkt werden kann. Beispielsweise können mittels des Betriebs der Kolben-Zylinder-Einheit bewusst die beiden Hauptrahmen um die Schwenkachse aufeinander zu geschwenkt werden, sodass ein Kraftabtrag über die beiden Haupträder in den Untergrund reduziert und entsprechend der Kraftabtrag über die Stützräder erhöht wird. Ein solcher Betrieb kann beispielsweise im Bereich eines Vorgewendes vorteilhaft sein, um den Untergrund vor einem Eintrag von hohen Scherkräften zu schonen. Ebenfalls ist ein solcher Betrieb bei einer Straßenfahrt einer jeweiligen Arbeitsmaschine denkbar.

In besonders bevorzugter Weise verfügt das Raupenlaufwerk sowohl über ein passives Federelement als auch über eine aktive Kolben-Zylinder-Einheit. Auf diese Weise sind die verschiedenen Betriebszustände besonders einfach einstellbar. Das Federelement und die Kolben-Zylinder-Einheit können optional in Form einer gemeinsamen Baugruppe ausgeführt sein, wobei das Federelement als Teil der Kolben-Zylinder-Einheit ausgebildet ist und hierbei an seinem einen Ende auf den Kolben und an seinem anderen Ende auf den Zylinder der Kolben-Zylinder-Einheit einwirkt. Hierdurch ist gemäß vorstehender Erläuterung zu dem Federelement eine Wirkung auf den vorderen Hauptrahmen zum einen und den hinteren Hauptrahmen zum anderen bedingt.

Des Weiteren kann eine solche Ausgestaltung des Raupenlaufwerks vorteilhaft sein, bei der das Koppelglied von einer Kolben-Zylinder-Einheit gebildet ist. Als solche ist das Koppelglied vorzugsweise dazu vorgesehen und eingerichtet, Bewegungen, die die Stützräder und der hintere Hauptrahmen relativ zueinander ausführen, zu dämpfen. Um dies zu bewirken kann es besonders vorteilhaft sein, wenn ein zylinderseitiger Hauptdruckraum des Koppelglieds mit einem Gasspeicher zusammenwirkt, sodass das Koppelglied als Gasfeder wirken kann. Hierdurch ist sichergestellt, dass ein guter Fahrkomfort für die jeweilige Arbeitsmaschine, an der das Raupenlaufwerk angeordnet ist, gegeben ist. Insbesondere können schlagartige Auslenkungen infolge des Überfahrens von Hindernissen und dadurch entstehende Kräfte gedämpft werden. Neben einer Verbesserung des Fahrkomforts werden hierdurch auch die Komponenten des Raupenlaufwerks sowie der jeweiligen Arbeitsmaschine insgesamt geschont.

Sofern das Koppelglied von einer Kolben-Zylinder-Einheit gebildet ist, kann es weiterhin besonders vorteilhaft sein, wenn es doppelwirkend ausgebildet ist. Hierbei ist ein kolbenseitiger Nebendruckraum mit Druck beaufschlagbar, wodurch ein Druck in einem zylinderseitigen Hauptdruckraum eingestellt werden kann. Dies kann insbesondere derart erfolgen, dass sich der Druck in dem Hauptdruckraum innerhalb eines voreingestellten Bereichs befindet. Mit anderen Worten kann mittels des Aufbringens eines Drucks auf den kolbenseitigen Nebendruckraum ein Druckniveau in dem zylinderseitigen Hauptdruckraum bewusst innerhalb eines bestimmten Bereichs gehalten werden. Dies hat den Vorteil, dass das Koppelglieds in einem vorteilhaften Bereich seiner Kennlinie gehalten werden kann, das heißt die dämpfenden Eigenschaften des Koppelglieds in besonders vorteilhafter Weise ausgenutzt werden können.

Die vorliegende Aufgabe wird erfindungsgemäß ferner mittels einer landwirtschaftlichen Arbeitsmaschine mit den Merkmalen des Anspruchs 11 gelöst.

Die Arbeitsmaschine umfasst eine Karosserie sowie zwei Raupenlaufwerke, nämlich ein linkes und ein rechtes Raupenlaufwerk. Die Raupenlaufwerke sind jeweils über eine Anlenkstelle mit der Karosserie verbunden. Insbesondere können die Raupenlaufwerke an eine Vorderachse der Arbeitsmaschine angeschlossen sein. Die Arbeitsmaschine ist dadurch gekennzeichnet, dass mindestens eines der Raupenlaufwerke, vorzugsweise beide Raupenlaufwerke, von einem erfindungsgemäßen Raupenlaufwerk gemäß der vorliegenden Anmeldung gebildet ist bzw. sind. Die sich hierdurch ergebenden Vorteile sind vorstehend bereits dargelegt.

Die Erfindung ist nachstehend anhand eines Ausführungsbeispiels, das in den Figuren dargestellt ist, näher erläutert. Es zeigt:
- Fig. 1:: Eine schematische Seitenansicht einer landwirtschaftlichen Arbeitsmaschine, die mit zwei Raupenlaufwerken ausgestattet ist,
- Fig. 2:: Ein Querschnitt durch einen Raupenlaufwerk gemäß dem Stand der Technik,
- Fig. 3:: Eine Prinzipdarstellung eines ersten erfindungsgemäßen Raupenlaufwerks,
- Fig. 4:: Eine Prinzipdarstellung eines zweiten erfindungsgemäßen Raupenlaufwerks,
- Fig. 5:: Eine Prinzipdarstellung eines dritten erfindungsgemäßen Raupenlaufwerks,
- Fig. 6:: Eine Prinzipdarstellung eines vierten erfindungsgemäßen Raupenlaufwerks.

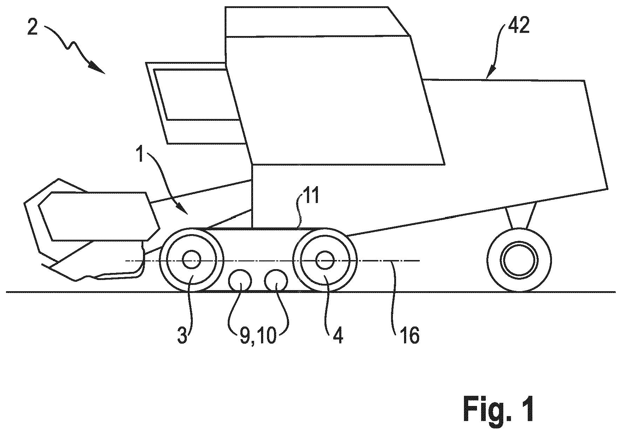

In **Figur** 1 ist eine landwirtschaftliche Arbeitsmaschine 2 in Form eines selbstfahrenden Mähdreschers dargestellt, dessen Karosserie 42 mit zwei Raupenlaufwerken 1 zusammenwirkt. Die Raupenlaufwerke 1 sind hier an eine Vorderachse der Arbeitsmaschine 2 angeschlossen. Das Raupenlaufwerk 1 verfügt über ein vorderes Hauptrad 3, ein hinteres Hauptrad 4 sowie zwei Stützräder 9, 10. Ferner umfasst das Raupenlaufwerk 1 einen Laufgurt 11, der die beiden Haupträder 3, 4 umspannt. Die Haupträder 3, 4 sind entlang einer Längsachse 16 des Raupenlaufwerks 1 betrachtet einander gegenüberliegend angeordnet. Die Stützräder 9, 10 sind in einem Zwischenbereich zwischen den Haupträdern 3, 4 angeordnet. Insgesamt findet ein Abtrag von Kräften, die von der Arbeitsmaschine 2 in das Raupenlaufwerk 1 abgeleitet werden, sowohl über die Haupträder 3, 4 als auch über die Stützräder 9, 10 in einen Untergrund statt.

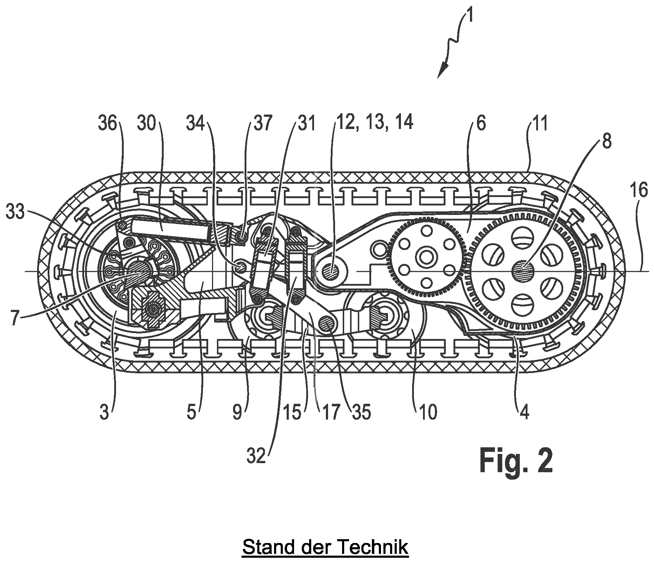

Die Konstruktion eines erfindungsgemäßen Raupenlaufwerks 1 ist in seinen Grundzügen gleich zu bekannten Raupenlaufwerken gemäß dem Stand der Technik. Ein solches ist beispielhaft in **Figur** 2 dargestellt. Das dortige Raupenlaufwerk 1 verfügt über einen vorderen Hauptrahmen 5 und einen hinteren Hauptrahmen 6. Die beiden Hauptrahmen 5, 6 sind an einer mittigen Anlenkstelle 12 des Raupenlaufwerks 1 unter Ausbildung einer Schwenkachse 14 in relativ zueinander verschwenkbarer Weise miteinander verbunden. In dem gezeigten Beispiel fällt die Schwenkachse 14 mit einer an der Anlenkstelle 12 ausgebildeten Maschinenachse 13 zusammen, um die das Raupenlaufwerk 1 als Ganzes um eine jeweilige Achse der Arbeitsmaschine 2 verschwenkbar gelagert ist. Die Maschinenachse 13 und die Schwenkachse 14 sind horizontal sowie senkrecht zu einer Gurtebene orientiert, die von dem Laufgurt 11 aufgespannt wird. In **Figur** 2 ist die Gurtebene von der Zeichnungsebene gebildet. Ferner ist die Schwenkachse 14 bezogen auf die Längsachse 16 des Raupenlaufwerks 1 mittig angeordnet, sodass eine vertikale Mittelebene 29, die ebenfalls senkrecht zu der Gurtebene des Laufgurts 11 orientiert ist und die Schwenkachse 14 beinhaltet, das Raupenlaufwerk 1 in zwei zumindest im Wesentlichen gleich große Abschnitte teilt, nämlich einen vorderen Abschnitt und einen hinteren Abschnitt. Der vordere Abschnitt beinhaltet den vorderen Hauptrahmen 5 und das vordere Hauptrad 3, während der hintere Abschnitt den hinteren Rahmen 6 und das hintere Hauptrad 4 umfasst. Ferner ist bei Vorliegen des Raupenlaufwerks 1 in einer Mittellage, die in **Figur** 2 veranschaulicht ist, die Schwenkachse 14 in vertikale Richtung betrachtet mittig angeordnet, sodass ein vertikal gemessener Abstand der Schwenkachse 14 von einem unteren Abschnitt 39 des Laufgurts 11 genauso groß ist wie ein vertikal gemessene Abstand der Schwenkachse 14 von einem oberen Abschnitt 38 des Laufgurts 11. Hierdurch bedingt bewirken infolge einer Gurtspannung des Laufgurts 11 in dem Laufgurt 11 herrschende Kräfte kein Drehmoment um die Schwenkachse 14, sofern sich letztere in ihrer in **Figur** 2 dargestellten Nulllage befindet, die die Schwenkachse 14 bei Vorliegen des Raupenlaufwerks 1 in dessen Mittellage einnimmt.

An den vorderen Hauptrahmen 5 ist eine Stützradschwinge 17 unter Ausbildung eines Gelenks 34 angelenkt. An einem dem Gelenk 34 gegenüberliegenden Ende der Stützradschwinge 17 ist letztere - ebenfalls unter Ausbildung eines Gelenks 35 - mit einem Stützrahmen 15 verbunden. An diesem Stützrahmen 15 sind die beiden Stützräder 9, 10 jeweils drehbeweglich gelagert.

In dem gezeigten Beispiel ist das vordere Hauptrad 3 lediglich mittelbar an dem vorderen Hauptrahmen 5 gelagert. Dies erfolgt hier derart, dass das vordere Hauptrad 3 an einem Schwenkarm 33 gelagert ist, der wiederum gelenkig an dem vorderen Hauptrahmen 5 gelagert ist. Auf diese Weise kann ein Abstand der Drehachse 7 des vorderen Hauptrades 3 von der Schwenkachse **14** mittels Verschwenkens des Schwenkarms **33** relativ zu dem vorderen Hauptrahmen **5** verändert werden. Dies wird dazu genutzt, die Gurtspannung des Laufgurts **11** nachzustellen. Um dies zu erreichen, umfasst das gezeigte Raupenlaufwerk **1** einen von einer Kolben-Zylinder-Einheit gebildeten Bandspannzylinder **30,** der mit seinem ersten Ende **36** an dem Schwenkarm **33** und mit seinem zweiten Ende **37** an dem vorderen Hauptrahmen 5 gelagert ist. Mittels einer Veränderung der Auslenkung des Bandspannzylinders 30 kann der Schwenkarm 33 relativ zu dem Hauptrahmen 5 verschwenkt werden, wodurch in der beschriebenen Weise die Drehachse 7 horizontal verlagert und entsprechend die Gurtspannung des Laufgurts 11 verändert wird.

Das gezeigte Raupenlaufwerk 1 umfasst ferner zwei weitere Kolben-Zylinder-Einheiten 31, 32, wobei die erstgenannte den vorderen Hauptrahmen 5 mit dem hinteren Hauptrahmen **6** und die zweitgenannte die Stützradschwinge 17 mit dem vorderen Hauptrahmen 5 koppeln. In Zusammenwirkung sind die Kolben-Zylinder-Einheiten 31, 32 dazu vorgesehen und eingerichtet, eine Verteilung der auf das Raupenlaufwerk 1 wirkenden Kräfte auf die Haupträder 3, 4 und die Stützräder 9, 10 zu bewirken. Hierzu können Druckräume der beiden Kolben-Zylinder-Einheiten 31, 32 strömungstechnisch miteinander gekoppelt sein, sodass die Verdrängung eines hydraulischen Fluids aus dem Druckraum der einen Kolben-Zylinder-Einheit 31, 32 zu einem entsprechenden Zufluss des Fluids in den Druckraum der jeweils anderen Kolben-Zylinder-Einheit 31, 32 zur Folge hat. Hierdurch werden die Komponenten vorderer Hauptrahmen 5, hinterer Hauptrahmen 6 und Stützradschwinge 17 bzw. Stützrahmen 15 kinematisch miteinander gekoppelt, um die genannte Kraftverteilung zu bewirken und insbesondere die Räder 3, 4, 9, 10 durchgehend in Kontakt mit dem Untergrund zu halten. Diese soll insbesondere auch dann erhalten bleiben, wenn die Räder 3, 4, 9, 10 bei Überfahren eines Hindernisses verschiedentlich angehoben werden.

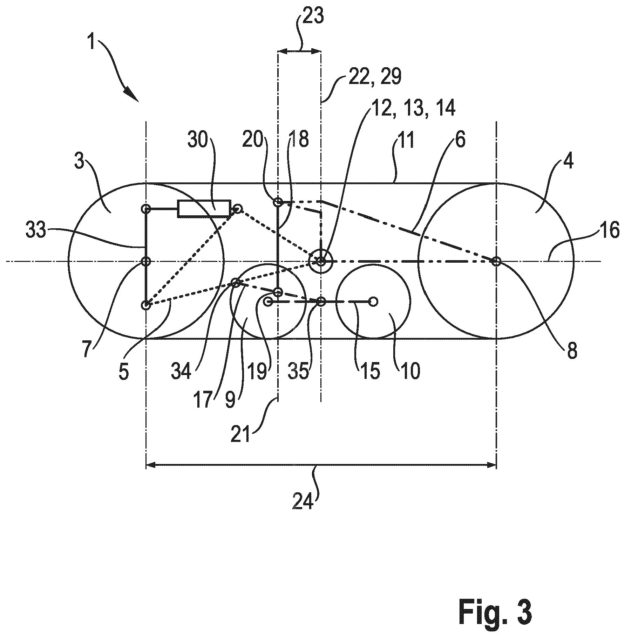

Eine erste Variante eines erfindungsgemäßen Raupenlaufwerks 1 ist in **Figur 3** veranschaulicht. Es unterscheidet sich von dem bekannten Raupenlaufwerk 1 insbesondere durch ein Koppelglied 18, das die Stützradschwinge 17 mit dem hinteren Hauptrahmen 6 koppelt. Entsprechend ist ein Schwingenende 19 des Koppelglieds 18 gelenkig mit der Stützradschwinge 17 verbunden, während ein Rahmenende 20 des Koppelglieds 18 gelenkig mit dem hinteren Hauptrahmen 6 verbunden ist. Auf diese Weise wirkt das Koppelglied 18 mechanisch als Pendelstab, der lediglich Normalkräfte übertragen kann, jedoch keine Übertragung von Drehmomenten zwischen der Stützradschwinge 17 und dem hinteren Hauptrahmen 6 ermöglicht. Das Koppelglied 18 führt dazu, dass der vordere Hauptrahmen 5, die Stützradschwinge 17 und der hintere Hauptrahmen 6 kinematisch miteinander gekoppelt sind. Auf diese Weise wird allein durch das Koppelglied **18** erreicht, dass bei einer Anhebung eines der Räder **3, 4, 9, 10** die verbleibenden Räder **3, 4, 9, 10** in Kontakt mit dem Untergrund bleiben und entsprechend weiterhin ein Kraftabtrag über diese Räder **3, 4, 9, 10** in den Untergrund erfolgt. Dies ist anhand zweier Beispiele in der vorstehenden Beschreibung bereits erläutert worden. Im Unterschied zu dem Raupenlaufwerk 1 gemäß dem Stand der Technik ist es demzufolge nicht erforderlich, zwei separate Kolben-Zylinder-Einheiten 31, 32 zu verbauen, um die Stützradschwinge 17 sowie den vorderen Hauptrahmen 5 und den hinteren Hauptrahmen 6 kinematisch miteinander zu koppeln. Entsprechend ist das erfindungsgemäße Raupenlaufwerk 1 gegenüber dem Stand der Technik deutlich vereinfacht, ohne dass es zu einer Einschränkung der Funktionalität kommt. In besonders vorteilhafter Weise ist das Raupenlaufwerk 1 gemäß **Figur** 3 frei von weiteren Koppelgliedern, die beispielsweise die Stützradschwinge 17 mit dem vorderen Hauptrahmen 5 oder die beiden Hauptrahmen 5, 6 miteinander koppeln. Gegenüber dem Stand der Technik ist das Raupenlaufwerk 1 entsprechend besonders einfach konstruiert, ohne hinsichtlich seiner Funktionalität nachteilig zu sein.

In dem gezeigten Beispiel ist das Koppelglied 18 zumindest im Wesentlichen vertikal orientiert, sodass es zumindest im Wesentlichen parallel zu einer Vertikalen 22 orientiert ist. Dies ergibt sich besonders gut anhand von **Figur** 3. Ferner findet sich das Koppelglied 18 vollständig auf einer Seite der Schwenkachse 14, wobei es sich in dem gezeigten Beispiel in dem vorderen Abschnitt des Raupenlaufwerks 1 diesseits der Mittelebene 29 befindet. Ferner ist das Koppelglied 18 derart angeordnet, dass es sich in einem horizontal gemessenen Abstand 23 von der Schwenkachse 14 befindet, der in etwa einem Achtel eines ebenfalls horizontal gemessenen Radabstands 24 zwischen den Drehachsen 7, 8 der beiden Haupträder 3, 4 entspricht. Bei dieser Anordnung wird zumindest bei Vorliegen des Raupenlaufwerks 1 in seiner in **Figur** 3 gezeigten Mittellage eine an der Anlenkstelle 12 an das Raupenlaufwerk 1 übertragende Kraft zu jeweils einem Viertel über die beiden Haupträder 3, 4 und die beiden Stützräder 9, 10 in den Untergrund abgeleitet. Ferner ist in dem gezeigten Beispiel das Schwingenende 19 des Koppelglieds 18 in etwa mittig an der Stützradschwinge 17 angeordnet, sodass ein horizontal gemessener Abstand des Schwingenendes 19 von den beiden Gelenken 34, 35 gleich groß ist. Hierdurch wird bewirkt, dass eine über das Koppelglied 18 auf die Stützradschwinge 17 übertragene vertikale Kraft in etwa hälftig auf den vorderen Hauptrahmen 5 und hälftig auf den Stützrahmen 15 abgeleitet wird.

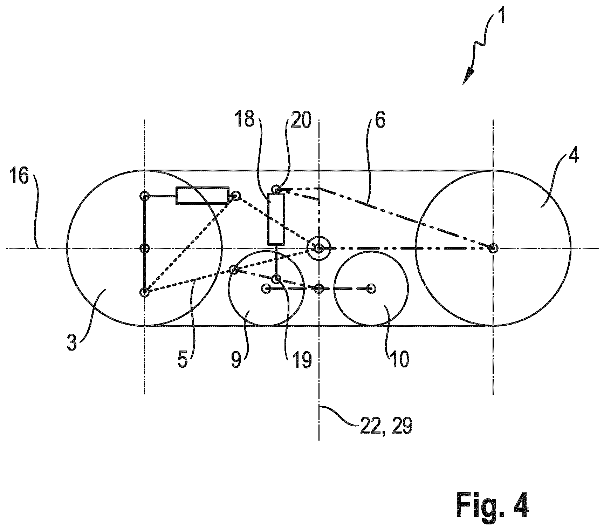

In einer weiteren Variante eines erfindungsgemäßen Raupenlaufwerks 1, die in **Figur** 4 dargestellt ist, ist das Koppelglied 18 von einer Kolben-Zylinder-Einheit gebildet. Im Übrigen sind die Ausführungsbeispiele gleichartig ausgebildet. Die Ausgestaltung des Koppelglieds 18 als Kolben-Zylinder-Einheit hat den Vorteil, dass das Koppelglied 18 mit einer dämpfenden Wirkung ausgestattet ist, wodurch schlagartig wirkende Kräfte auf die Haupträder 3, 4 und/oder die Stützräder 9, 10 lediglich gedämpft an die Achse der jeweiligen Arbeitsmaschine 2 weitergegeben werden. Bei dieser Ausgestaltung kann das Koppelglied **18** insbesondere nach Art einer Gasfeder ausgebildet sein, wobei ein zylinderseitiger Hauptdruckraum des Koppelglieds **18** mit einem Gas gefüllt ist, das infolge einer Krafteinwirkung komprimierbar ist. Ferner kann der Hauptdruckraum zu diesem Zweck mit einem nicht dargestellten Gasspeicher zusammenwirken.

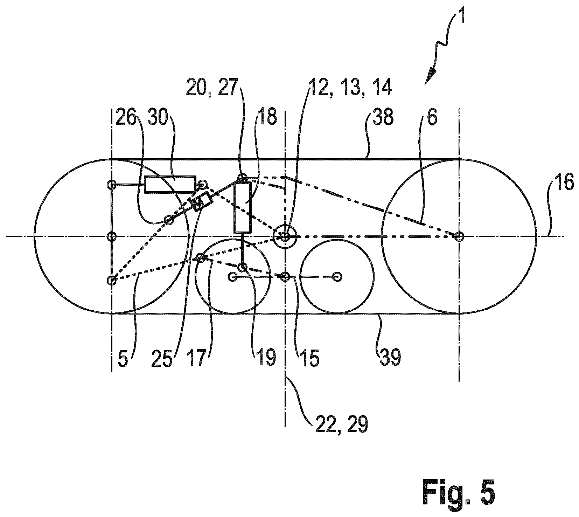

Eine weitere Variante eines erfindungsgemäßen Raupenlaufwerks 1, die in **Figur** 5 dargestellt ist, ist gegenüber der in **Figur 4** dargestellten zweiten Variante dahingehend weitergebildet, dass das Raupenlaufwerk 1 ferner über ein Federelement 25 verfügt. Dieses ist an einem ersten Ende 26 mit dem vorderen Hauptrahmen 5 und mit einem zweiten Ende 27 mit dem hinteren Hauptrahmen 6 verbunden, sodass mittels des Federelements 25 bewirkte Federkräfte einander entgegengesetzt unmittelbar auf den vorderen Hauptrahmen 5 und den hinteren Hauptrahmen 6 wirken. In dem gezeigten Beispiel ist das Federelement 25 passiv ausgebildet, sodass durch das Federelement 25 bewirkt Kräfte allein infolge einer Auslenkung des Federelements 25 bedingt sind. Hierbei ist das Federelement 25 in Form einer Kolben-Zylinder-Einheit ausgebildet, wobei ein in einem Zylinder geführter Kolben der Kolben-Zylinder-Einheit mittels einer Feder gegen den Zylinder gespannt ist. Der Kolben ist in dem gezeigten Beispiel an dem ersten Ende des Federelements 25 an den vorderen Hauptrahmen 5 und der Zylinder an dem zweiten Ende 27 des Federelements 25 an den hinteren Hauptrahmen 6 angeschlossen.

Das Federelement 25 hat die Funktion, das vorstehend beschriebene Aufstellen des Raupenlaufwerks 1 infolge einer vertikalen Verlagerung der Schwenkachse **14** ausgehend von ihrer in **Figur** 5 dargestellten Nulllage nach oben zu reduzieren und hierdurch zu kontrollieren. Besagtes Aufstellen ist dadurch bedingt, dass ein vertikal gemessener Abstand der Schwenkachse **14** infolge einer Verlagerung derselben von einem oberen Abschnitt 38 des Laufgurts **11** verringert wird, während ein gleichartig gemessener Abstand der Schwenkachse **14** von einem unteren Abschnitt 39 des Laufgurts **11** vergrößert wird. Hierdurch bedingt wird infolge einer Gurtspannung des Laufgurts **11** ein Drehmoment um die Schwenkachse **14** auf den vorderen Hauptrahmen 5 und den hinteren Hauptrahmen 6 bewirkt, sodass sich eine selbst verstärkende Auslenkung der Schwenkachse **14** nach oben ergibt. Das Federelement 25 dient dazu, einem infolge einer solchen Bewegung der beiden Hauptrahmen 5, 6 bedingten Anstieg einer Entfernung zwischen den beiden Enden 26, 27 des Federelements **25** entgegenzuwirken. Dies erfolgt in dem gezeigten Beispiel derart, dass die zwischen dem Kolben und dem Zylinder wirkende Feder des Federelements **25** komprimiert wird und hierdurch einem Ausfahren des Kolbens aus dem Zylinder entgegenwirkt. Hierdurch werden die beiden Enden **26, 27** des Federelements **25** aufeinander zu gezogen, wodurch ein dem Aufstellen des Raupenlaufwerks 1 entgegenwirkendes Drehmoment auf die beiden Hauptrahmen 5, 6 aufgebracht wird.

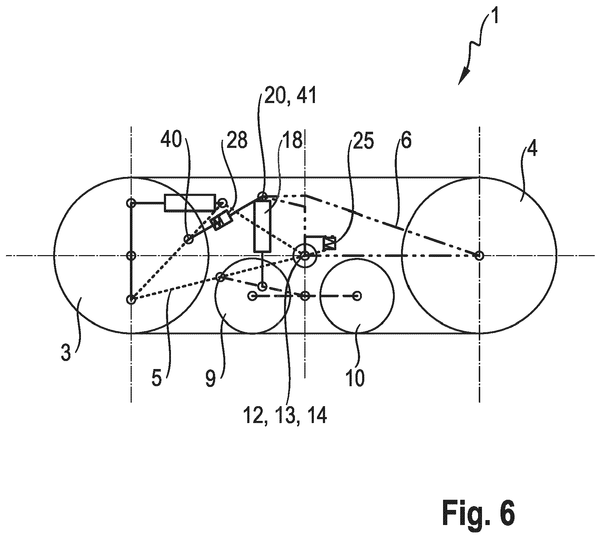

In einer weiteren Variante eines erfindungsgemäßen Raupenlaufwerks **1,** die in **Figur 6** dargestellt ist, ist das Raupenlaufwerk 1 ebenfalls mit einem passiven Federelement 25 ausgestattet. Dieses ist jedoch im Unterschied zu der dritten Variante gemäß **Figur** 5 an anderer Stelle angeordnet, wobei die beabsichtigte Wirkung, nämlich die Aufbringung eines Drehmoments, das einem Aufstellen des Raupenlaufwerks 1 bei Verlagerung der Schwenkachse **14** entgegenwirkt, identisch ist. Hierbei ist das Federelement 25 als Druckfeder ausgebildet, die im Zuge eines Aufstellens des Raupenlaufwerks 1 komprimiert wird und hierdurch dem Aufstellen entgegenwirkt. Ferner verfügt das Raupenlaufwerk 1 in dem gezeigten Beispiel über eine aktive Kolben-Zylinder-Einheit 28, deren erstes Ende **40** mit dem vorderen Hauptrahmen 5 und deren zweites Ende **41** mit dem hinteren Hauptrahmen 6 zusammenwirken. Die Kolben-Zylinder-Einheit 28 ist mit einer hydraulischen Druckquelle verbunden, die in **Figur** 6 nicht dargestellt ist. Hierdurch ist insbesondere die Möglichkeit geschaffen, einen kolbenseitigen Druckraum der Kolben-Zylinder-Einheit 28 mit Druck zu beaufschlagen, wodurch der Kolben in den Zylinder eingefahren wird. Dies führt zu einer Verkürzung der Kolben-Zylinder-Einheit 28 und mithin zu einer Bewegung der beiden Enden **40, 41** der Kolben-Zylinder-Einheit 28 aufeinander zu. Zumindest bei Vorliegen des Raupenlaufwerks 1 in einer Mittellage ist eine solche Bewegung gleichbedeutend damit, dass die beiden Haupträder 3, 4 angehoben und dadurch entlastet werden, während die beiden Stützräder 9,10 einen höheren Anteil zum Abtrag der auf das Raupenlaufwerk 1 einwirkenden Kräfte beitragen. Auf diese Weise ist es möglich, gezielt die über die beiden Haupträder 3, 4 in den Untergrund abgeleitet Kräfte zu reduzieren, was beispielsweise bei einem Wendemanöver der Arbeitsmaschine 2 im Bereich eines Vorgewendes oder bei einer Straßenfahrt jeweiligen Arbeitsmaschine 2 vorteilhaft sein kann.

Im Übrigen ist es denkbar, dass das als Kolben-Zylinder-Einheit ausgebildete Koppelglied **18** doppelwirkend ausgebildet ist. Hierbei ist ein zylinderseitigen Hauptdruckraum zwecks Erfüllung einer Dämpferfunktion beispielsweise mit einem Gasspeicher strömungstechnisch verbunden, sodass das Koppelglied **18** als Gasfeder wirken kann. Ferner ist ein kolbenseitiger Nebendruckraum aktiv mit Druck beaufschlagbar, beispielsweise mittels einer Koppelung mit einer hydraulischen Druckquelle der jeweiligen Arbeitsmaschine 2. Hierdurch kann erreicht werden, dass der Druck in dem Hauptdruckraum "künstlich" innerhalb eines vorgegebenen Bereichs gehalten wird. Dies kann beispielsweise von Vorteil sein, wenn eine auf das Raupenlaufwerk 1 einwirkende Kraft von so geringem Betrag ist, dass der Druck in dem Hauptdruckraum außerhalb eines vorteilhaften Bereichs liegt. Insbesondere wird versucht, das Koppelglied **18** in einem vorteilhaften Bereich seiner Kennlinie zu halten, um die dämpfenden Eigenschaften des Koppelglieds **18** bestmöglich zu nutzen. Mittels des Aufbringens eines Drucks auf den Nebendruckraum kann der Druck in dem Hauptdruckraum derart geregelt werden, dass er stets innerhalb eines vordefinierten, vorteilhaften Bereichs liegt.

### Bezugszeichenliste

- 1: Raupenlaufwerk
- 2: Arbeitsmaschine
- 3: vorderes Hauptrad
- 4: hinteres Hauptrad
- 5: vorderer Hauptrahmen
- 6: hinterer Hauptrahmen
- 7: Drehachse
- 8: Drehachse
- 9: Stützrad
- 10: Stützrad
- 11: Laufgurt
- 12: Anlenkstelle
- 13: Maschinenachse
- 14: Schwenkachse
- 15: Stützrahmen
- 16: Längsachse
- 17: Stützradschwinge
- 18: Koppelglied
- 19: Schwingenende
- 20: Rahmenende
- 21: Gliedachse
- 22: Vertikale
- 23: Abstand
- 24: Radabstand
- 25: Federelement
- 26: Ende
- 27: Ende
- 28: Kolben-Zylinder-Einheit
- 29: Mittelebene
- 30: Bandspannzylinder
- 31: Kolben-Zylinder-Einheit
- 32: Kolben-Zylinder-Einheit
- 33: Schwenkarm
- 34: Gelenk
- 35: Gelenk
- 36: Ende
- 37: Ende
- 38: Abschnitt
- 39: Abschnitt
- 40: Ende
- 41: Ende
- 42: Karosserie

## Patentansprüche

1. Raupenlaufwerk (1) für eine landwirtschaftliche Arbeitsmaschine (2), umfassend
- ein vorderes Hauptrad (3),
- ein in Längsrichtung des Raupenlaufwerks (1) betrachtet dem vorderen Hauptrad (3) gegenüberliegendes hinteres Hauptrad (4),
- einen dem vorderen Hauptrad (3) zugeordneten vorderen Hauptrahmen (5),
- einen dem hinteren Hauptrad (4) zugeordneten hinteren Hauptrahmen (6),
- mindestens zwei in einem Zwischenbereich zwischen den Haupträdern (3, 4) angeordnete Stützräder (9, 10),
- einen die Haupträder (3, 4) umspannenden Laufgurt (11),
- eine Anlenkstelle (12), mittels der das Raupenlaufwerk (1) unter Ausbildung einer Maschinenachse (13) schwenkbeweglich mit einer Karosserie (42) der Arbeitsmaschine (2) verbindbar ist,
wobei die beiden Hauptrahmen (5, 6) um eine gemeinsame Schwenkachse (14) schwenkbeweglich miteinander gekoppelt sind,
wobei die Stützräder (9, 10) an einem gemeinsamen Stützrahmen (15) bezogen auf eine Längsachse (16) des Raupenlaufwerks (1) hintereinander angeordnet sind,
wobei der Stützrahmen (15) mittels einer Stützradschwinge (17) schwenkbeweglich mit dem vorderen Hauptrahmen (5) verbunden ist,
**gekennzeichnet durch**
ein Koppelglied (18), das an einem Schwingenende (19) des Koppelglieds (18) mit der Stützradschwinge (17) und an einem Rahmenende (20) des Koppelglieds (18) mit dem hinteren Hauptrahmen (6) gekoppelt ist und hierdurch die Stützradschwinge (17) und den hinteren Hauptrahmen (6) miteinander koppelt.

2. Raupenlaufwerk (1) nach Anspruch 1, **dadurch gekennzeichnet, dass** das Koppelglied (18) derart ausgerichtet ist, dass eine das Schwingenende (19) und das Rahmenende (20) verbindende, in sich gerade Gliedachse (21) höchstens um 15°, vorzugsweise höchstens um 10°, weiter vorzugsweise höchstens um 5°, gegen eine Vertikale (22) geneigt orientiert ist.

3. Raupenlaufwerk (1) nach einem der vorhergehenden Ansprüche, **dadurch gekennzeichnet, dass** die Schwenkachse (14) der beiden Hauptrahmen (3, 4) mit der Maschinenachse (13) zusammenfällt.

4. Raupenlaufwerk (1) nach einem der vorhergehenden Ansprüche, **dadurch gekennzeichnet, dass** das Schwingenende (19) und das Rahmenende (20) des Koppelglieds (18) auf derselben Seite einer vertikal orientierten, die Schwenkachse (14) beinhaltenden Mittelebene (29) angeordnet sind.

5. Raupenlaufwerk (1) nach einem der vorhergehenden Ansprüche, **dadurch gekennzeichnet, dass** das Schwingenende (19) des Koppelglieds (18) in Richtung parallel zu der Längsachse (16) des Raupenlaufwerks (1) betrachtet von der Maschinenachse (13) in einem Abstand (23) von höchstens 1/4, vorzugsweise höchstens 1/6, weiter vorzugsweise höchstens 1/8, eines entsprechend gemessenen Radabstands (24) zwischen den Drehachsen (7, 8) der Haupträder (3, 4) angeordnet ist.

6. Raupenlaufwerk (1) nach einem der vorhergehenden Ansprüche, **dadurch gekennzeichnet, dass** die Drehachsen (7, 8) der beiden Haupträder (3, 4) und die Schwenkachse (14) bei Vorliegen des Raupenlaufwerks (1) in einer Mittellage, in der das Raupenlaufwerk (1) auf einem ebenen Untergrund steht, zumindest im Wesentlichen auf einem gemeinsamen Höhenniveau liegen.

7. Raupenlaufwerk (1) nach einem der vorhergehenden Ansprüche, **gekennzeichnet durch** ein, vorzugsweise passives, Federelement (25), dessen erstes Ende (26) an den vorderen Hauptrahmen (5) und dessen zweites Ende (27) an den hinteren Hauptrahmen (6) angeschlossen sind, wobei das Federelement (25) dazu vorgesehen und eingerichtet ist, die Hauptrahmen (5, 6) zumindest dann mit einem gegenseitigen Drehmoment um die gemeinsame Schwenkachse (14) zu beaufschlagen, wenn sich die Schwenkachse (14) oberhalb einer Nulllage befindet, die das jeweilige Hauptrad (3, 4) bei Vorliegen des Raupenlaufwerks (1) in einer Mittellage einnimmt, in der das Raupenlaufwerk (1) auf einem ebenen Untergrund steht.

8. Raupenlaufwerk (1) nach einem der vorhergehenden Ansprüche, **gekennzeichnet durch** eine aktive Kolben-Zylinder-Einheit (28), deren erstes Ende (40) an den vorderen Hauptrahmen (5) und dessen zweites Ende (41) an den hinteren Hauptrahmen (5) angeschlossen sind, wobei die Kolben-Zylinder-Einheit (28) dazu vorgesehen und eingerichtet ist, die Hauptrahmen (5, 6) aktiv mit einem gegenseitigen Drehmoment um die gemeinsame Schwenkachse (14) zu beaufschlagen.

9. Raupenlaufwerk (1) nach einem der vorhergehenden Ansprüche, **dadurch gekennzeichnet, dass** das Koppelglied (18) von einer Kolben-Zylinder-Einheit gebildet ist, wobei vorzugsweise die Kolben-Zylinder-Einheit dazu vorgesehen und eingerichtet ist, Bewegungen, die die Stützräder (9, 10) und der hintere Hauptrahmen (6) relativ zueinander ausführen, zu dämpfen.

10. Raupenlaufwerk (1) nach Anspruch 9, **dadurch gekennzeichnet, dass** die Kolben-Zylinder-Einheit doppelwirkend ausgebildet ist, wobei ein kolbenseitiger Nebendruckraum mit Druck beaufschlagbar ist, wodurch ein Druck in einem zylinderseitigen Hauptdruckraum derart einstellbar ist, dass sich der Druck in dem Hauptdruckraum innerhalb eines voreingestellten Bereichs befindet.

11. Landwirtschaftliche Arbeitsmaschine (2), umfassend
- eine Karosserie (42),
- ein linkes Raupenlaufwerk (1),
- ein rechtes Raupenlaufwerk (1),
wobei die Raupenlaufwerke (1) jeweils über eine Anlenkstelle (12) mit der Karosserie (42) verbunden sind,
**dadurch gekennzeichnet, dass**
mindestens eines der Raupenlaufwerke (1) gemäß einem der vorhergehenden Ansprüche ausgebildet ist.

## Claims

1. A track roller unit (1) for an agricultural working machine (2), comprising
- a front main wheel (3),
- a rear main wheel (4) which is opposite the front main wheel (3) viewed in the longitudinal direction of the track roller unit (1),
- a front main frame (5) associated with the front main wheel (3),
- a rear main frame (6) associated with the rear main wheel (4),
- at least two support wheels (9, 10) disposed in an intermediate region between the main wheels (3, 4),
- a track belt (11) encompassing the main wheels (3, 4),
- an articulation point (12), by means of which the track roller unit (1) can be pivotably connected to a body (42) of the working machine (2) through the formation of a machine axis (13),
wherein the two main frames (5, 6) are pivotably coupled to each other about a common pivot axis (14),
wherein the support wheels (9, 10) are disposed one behind the other with respect to a longitudinal axis (16) of the track roller unit (1) on a common support frame (15),
wherein the support frame (15) is pivotably connected to the front main frame (5) by means of a support wheel rocker arm (17),
**characterized by**
a coupling link (18), which is coupled to the support wheel rocker arm (17) at a rocker arm end (19) of the coupling link (18) and to the rear main frame (6) at a frame end (20) of the coupling link (18) and thereby couples the support wheel rocker arm (17) and the rear main frame (6) with each other.

2. The track roller unit (1) according to claim 1, **characterized in that** the coupling link (18) is orientated in a manner such that a link axis (21) which is straight in itself and connects the rocker arm end (19) and the frame end (20) is inclined by at most 15°, preferably by at most 10°, more preferably by at most 5°, to a vertical (22).

3. The track roller unit (1) according to one of the preceding claims, **characterized in that** the pivot axis (14) of the two main frames (3, 4) coincides with the machine axis (13).

4. The track roller unit (1) according to one of the preceding claims, **characterized in that** the rocker arm end (19) and the frame end (20) of the coupling link (18) are disposed on the same side of a vertically orientated central plane (29) containing the pivot axis (14).

5. The track roller unit (1) according to one of the preceding claims, **characterized in that**, viewed in a direction parallel to the longitudinal axis (16) of the track roller unit (1), the rocker arm end (19) of the coupling link (18) is disposed at a distance (23) from the machine axis (13) of at most 1/4, preferably at most 1/6, more preferably at most 1/8, of a correspondingly measured wheel spacing (24) between the axes of rotation (7, 8) of the main wheels (3, 4).

6. The track roller unit (1) according to one of the preceding claims, **characterized in that** the axes of rotation (7, 8) of the two main wheels (3, 4) and the pivot axis (14) lie at least substantially at a common height level when the track roller unit (1) is located in a central position in which the track roller unit (1) stands on a level substrate.

7. The track roller unit (1) according to one of the preceding claims, **characterized by** a spring element (25), which is preferably passive, the first end (26) of which being connected to the front main frame (5) and the second end (27) of which being connected to the rear main frame (6), wherein the spring element (25) is provided and configured to apply a mutual torque to the main frames (5, 6) about the common pivot axis (14) at least when the pivot axis (14) is above a neutral position which the respective main wheel (3, 4) takes up when the track roller unit (1) is located in a central position in which the track roller unit (1) stands on a level substrate.

8. The track roller unit (1) according to one of the preceding claims, **characterized by** an active piston and cylinder unit (28), the first end of which (40) being connected to the front main frame (5) and the second end (41) of which being connected to the rear main frame (5), wherein the piston and cylinder unit (28) is provided and configured to actively apply a mutual torque to the main frames (5, 6) about the common pivot axis (14).

9. The track roller unit (1) according to one of the preceding claims, **characterized in that** the coupling link (18) is formed by a piston and cylinder unit, wherein preferably, the piston and cylinder unit is provided and disposed to damp movements which the support wheels (9, 10) and the rear main frame (6) execute relative to each other.

10. The track roller unit (1) according to claim 9, **characterized in that** the piston and cylinder unit is constructed to be double-acting, wherein a piston-side secondary pressure chamber can be pressurized, as a result of which a pressure in a cylinder-side primary pressure chamber can be adjusted in a manner such that the pressure in the primary pressure chamber is within a preset range.

11. An agricultural working machine (2), comprising
- a body (42),
- a left track roller unit (1),
- a right track roller unit (1),
wherein the track roller units (1) are respectively connected to the body (42) via an articulation point (12), **characterized in that**
at least one of the track roller units (1) is constructed in accordance with one of the preceding claims.

## Revendications

1. Mécanisme de roulement à chenilles (1) pour un engin agricole (2), comprenant
- une roue principale avant (3),
- une roue principale arrière (4) située à l'opposé de la roue principale avant (3), vu dans le sens longitudinal du mécanisme de roulement à chenilles (1),
- un châssis principal avant (5) associé à la roue principale avant (3),
- un châssis principal arrière (6) associé à la roue principale arrière (4),
- au moins deux roues de support (9, 10) disposées dans une zone intermédiaire entre les roues principales (3, 4),
- une bande de roulement (11) entourant les roues principales (3, 4),
- un point d'articulation (12) au moyen duquel le mécanisme de roulement à chenilles (1) peut être relié avec possibilité de pivotement à une carrosserie (42) d'un engin (2), en formant un axe de machine (13),
les deux châssis principaux (5, 6) étant accouplés l'un à l'autre avec possibilité de pivotement autour d'un axe de pivotement (14) commun,
les roues de support (9, 10) étant disposées l'une derrière l'autre sur un châssis de support (15) commun, rapporté à un axe longitudinal (16) du mécanisme de roulement à chenilles (1),
le châssis de support (15) étant relié avec possibilité de pivotement au châssis principal avant (5), au moyen d'un bras oscillant de roue de support (17),
**caractérisé en ce qu'**il comporte
un organe d'accouplement (18) qui est accouplé au bras oscillant de roue de support (17) par une extrémité de bras oscillant (19) de l'organe d'accouplement (18), et au châssis principal arrière (6) par une extrémité de châssis (20) de l'organe d'accouplement (18), et accouple de ce fait entre eux le bras oscillant de roue de support (17) et le châssis principal arrière (6).

2. Mécanisme de roulement à chenilles (1) selon la revendication 1, **caractérisé en ce que** l'organe d'accouplement (18) est orienté de manière à ce qu'un axe de l'organe (21) rectiligne en soi, reliant l'extrémité de bras oscillant (19) et l'extrémité de châssis (20), soit orienté avec une inclinaison d'au maximum 15°, de préférence d'au maximum 10°, et de manière particulièrement avantageuse d'au maximum 5° par rapport à une verticale (22).

3. Mécanisme de roulement à chenilles (1) selon une des revendications précédentes, **caractérisé en ce que** l'axe de pivotement (14) des deux châssis principaux (3, 4) coïncide avec l'axe de machine (13).

4. Mécanisme de roulement à chenilles (1) selon une des revendications précédentes, **caractérisé en ce que** l'extrémité de bras pivotant (19) et l'extrémité de châssis (20) de l'organe d'accouplement (18) sont disposées sur le même côté d'un plan médian (29) orienté verticalement et comportant l'axe de pivotement (14).

5. Mécanisme de roulement à chenilles (1) selon une des revendications précédentes, **caractérisé en ce que** l'extrémité de bras pivotant (19) de l'organe d'accouplement (18), vue dans la direction parallèle à l'axe longitudinal (16) du mécanisme de roulement à chenilles (1), est disposée à une distance (23) de l'axe de machine (13) qui est d'au maximum 1/4, de préférence d'au maximum 1/6, et de manière particulièrement avantageuse d'au maximum 1/8 d'un empattement (24), mesurée de manière correspondante, entre les axes de rotation (7, 8) des roues principales (3, 4).

6. Mécanisme de roulement à chenilles (1) selon une des revendications précédentes, **caractérisé en ce que**, lorsque le mécanisme de roulement à chenilles (1) occupe une position intermédiaire dans laquelle le mécanisme de roulement à chenilles (1) se trouve sur un support plan, les axes de rotation (7, 8) des deux roues principales (3, 4) et l'axe de pivotement (14) se situent au moins pour l'essentiel à un niveau en hauteur commun.

7. Mécanisme de roulement à chenilles (1) selon une des revendications précédentes, **caractérisé en ce qu'**il comprend un élément faisant ressort (25), de préférence passif, dont la première extrémité (26) est reliée au châssis principal avant (5) et dont la deuxième extrémité (27) est reliée au châssis principal arrière (6), l'élément faisant ressort (25) étant prévu et agencé pour appliquer aux châssis principaux (5, 6) un couple réciproque autour de l'axe de pivotement (14) commun, au moins lorsque l'axe de pivotement (14) se situe au-dessus d'une position zéro qui est occupée par la roue principale (3, 4) concernée lorsque le mécanisme de roulement à chenilles (1) se trouve dans une position intermédiaire dans laquelle le mécanisme de roulement à chenilles (1) est posé sur un support plan.

8. Mécanisme de roulement à chenilles (1) selon une des revendications précédentes, **caractérisé en ce qu'**il comprend une unité piston-cylindre (28) active dont la première extrémité (40) est reliée au châssis principal avant (5) et dont la deuxième extrémité (41) est reliée au châssis principal arrière (5), l'unité piston-cylindre (28) étant prévue et agencée pour appliquer aux châssis principaux (5, 6) de manière active un couple réciproque autour de l'axe de pivotement (14) commun.

9. Mécanisme de roulement à chenilles (1) selon une des revendications précédentes, **caractérisé en ce que** l'organe d'accouplement (18) est constitué d'une unité piston-cylindre, sachant que l'unité piston-cylindre est de préférence prévue et agencée pour amortir des mouvements effectués par les roues de support (9, 10) et le châssis principal arrière (6), les uns par rapport aux autres.

10. Mécanisme de roulement à chenilles (1) selon la revendication 9, **caractérisé en ce que** l'unité piston-cylindre est réalisée avec double effet, une chambre de pression secondaire côté piston pouvant être sollicitée par une pression, ce qui permet de régler une pression dans une chambre de pression principale, côté cylindre, de manière à ce que la pression dans la chambre de pression principale soit comprise dans une plage prédéfinie.

11. Engin agricole (2), comprenant
- une carrosserie (42),
- un mécanisme de roulement à chenilles (1) gauche,
- un mécanisme de roulement à chenilles (1) droit,
les mécanismes de roulement à chenilles (1) étant chacun relié à la carrosserie (42) par l'intermédiaire d'un point d'articulation (12), **caractérisé en ce qu'**il comprend
au moins un des mécanismes de roulement à chenilles (1) selon une des revendications précédentes.
